(19) Europäisches Patentamt
European Patent Office
Office européen des brevets

(11) **EP 1 863 249 B1**

(12) **EUROPEAN PATENT SPECIFICATION**

(45) Date of publication and mention
of the grant of the patent:
**11.04.2012 Bulletin 2012/15**

(51) Int Cl.:
*H04L 27/26* (2006.01)     *H04M 11/06* (2006.01)

(21) Application number: **07102089.5**

(22) Date of filing: **09.02.2007**

(54) **Method and device for dynamic spectrum management of xDSL upstream and downstream shared frequency**

Verfahren und Vorrichtung zur dynamischen Spektrumsverwaltung einer vom Aufwärts- und Abwärtsstrom gemeinsam benutzten xDSL-Frequenz

Procédé et dispositif pour la gestion dynamique du spectre de fréquence xDSL partagée en amont et en aval

(84) Designated Contracting States:
**AT BE BG CH CY CZ DE DK EE ES FI FR GB GR HU IE IS IT LI LT LU LV MC NL PL PT RO SE SI SK TR**

(30) Priority: **30.05.2006 CN 200610083512**

(43) Date of publication of application:
**05.12.2007 Bulletin 2007/49**

(73) Proprietor: **Huawei Technologies Co., Ltd.
Longgang District, Shenzhen
Guangdong 518129 (CN)**

(72) Inventors:
• **Lv, Zhipeng
518129, Shenzhen (CN)**
• **Liu, Jianhua
518129, Shenzhen (CN)**

(74) Representative: **Thun, Clemens et al
Mitscherlich & Partner
Sonnenstraße 33
80331 München (DE)**

(56) References cited:
**WO-A-02/100008**

• **FOROUZAN A R ET AL: "Generalized iterative spectrum balancing and grouped vectoring for maximal throughput of digital subscriber lines" GLOBAL TELECOMMUNICATIONS CONFERENCE, 2005. GLOBECOM '05. IEEE ST. LOIUS, MO, USA 28 NOV.-2 DEC. 2005, PISCATAWAY, NJ, USA,IEEE, 28 November 2005 (2005-11-28), pages 2359-2363, XP010879481 ISBN: 0-7803-9414-3**
• **CENDRILLON R ET AL: "Optimal multi-user spectrum management for digital subscriber lines" COMMUNICATIONS, 2004 IEEE INTERNATIONAL CONFERENCE ON PARIS, FRANCE 20-24 JUNE 2004, PISCATAWAY, NJ, USA,IEEE, vol. 1, 20 June 2004 (2004-06-20), pages 1-5, XP010710340 ISBN: 0-7803-8533-0**

**Description**

CROSS-REFERENCES TO RELATED APPLICATIONS

The present application claims priority to Chinese Patent Application No. 200610083512.4, filed May 30, 2006, commonly assigned.

BACKGROUND OF THE INVENTION

The present invention relates to network communication technologies and particularly a method and device for xDSL upstream and downstream shared frequency dynamic frequency spectrum management.

xDSL (Digital Subscriber Line, abbreviated as DSL and xDSL refers to a variety of digital subscriber line) is a type of high data rate digital transmission technology on telephone twisted pair (Unshielded Twisted Pair, UTP). After many years of development, it has developed from first generation ADSL (Asymmetric Digital Subscriber Line) to second generation ADSL2, ADSL2+ and VDSL (Very-high-data-rate Digital Subscriber Line), and VDSL2. ADSL and VDSL is a multi-carrier system, it adopts Discrete Multi Tone (DMT) modulation and divides the frequency domain into multiple non-overlapping subchannels, each of which is designated for upstream or downstream transmission. Each subchannel corresponds to a different carrier frequency and each carrier frequency is modulated using QAM modulation. Dividing the frequency domain in this way simplifies DSL design.

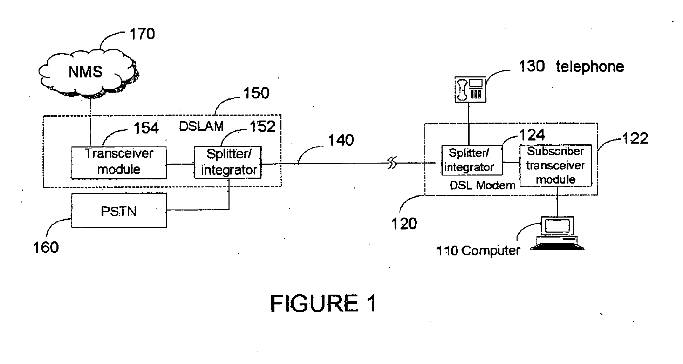

Figure 1 is a schematic diagram illustrating a reference model for an xDSL system (100);

As shown in figure 1, the DSLAM (120) comprises a subscriber end transceiver module (122) and separator/integrator (124). In the upstream direction, the subscriber end transceiver module (122) receives DSL information from the computer (110) and amplifies the received signal, and then sends the amplified DSL signal to the separator/integrator (124). The separator/integrator (124) integrates the DSL signal from the subscriber end transceiver module (122) and the POTS signal from the telephone terminal (130). The integrated signal is then transmitted through multiple UTP (140) circuits and is received by the separator/integrator (152) in the DSLAM (150) at the opposite end. The separator/integrator (152) separates the received signal, sends the POTS signal to the Public Switched Telephone Network (PSTN) (160) and sends the DSL signal to the transceiver module (154) of DSLAM (150). The transceiver module (154) re-amplifies the received signal then sends it to the network management system (abbreviated to NMS) (170). In the downstream direction, the signal is transmitted by the reverse of this process.

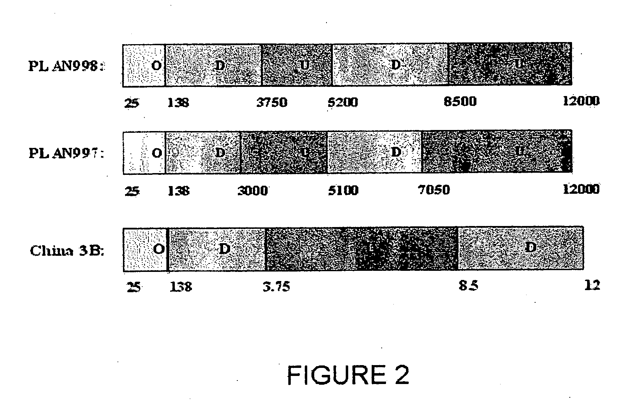

Figure 2 is a schematic diagram illustrating three main types of VDSL2 frequency spectrum division;

xDSL technology separates the entire frequency spectrum into an upstream (subscriber to exchange) section and a downstream (exchange to subscriber) section. Upstream and downstream bandwidth is non-overlapping and mutually independent. ADSL ( ADSL2 ) uses the frequency spectrum below 1.1MHz, 25kHz~138kHz is used for upstream and 138kHz~1.1MHz is used for downstream. This allows a maximum upstream data rate of 800kbps (1.5Mbps) and a maximum downstream data rate of 8Mbps (16Mbps). ADSL2+ extends the downstream frequency spectrum to 2.2MHz, and can provide a maximum of 25Mbps downstream data rate and maximum of 3Mbps upstream data rate. VDSL uses a maximum frequency spectrum of 12MHz and can provide a maximum of 52Mbps downstream data rate and a maximum of 26Mbps upstream data rate. VDSL2 uses a frequency spectrum of up to 30MHz and provides a symmetrical maximum upstream and downstream data rate of 100Mbps. G. 993.2 gives frequency domain division between 0~12MHz and between 12MHz~30MHz. As shown in figure 2, there are currently three main types of frequency domain division.

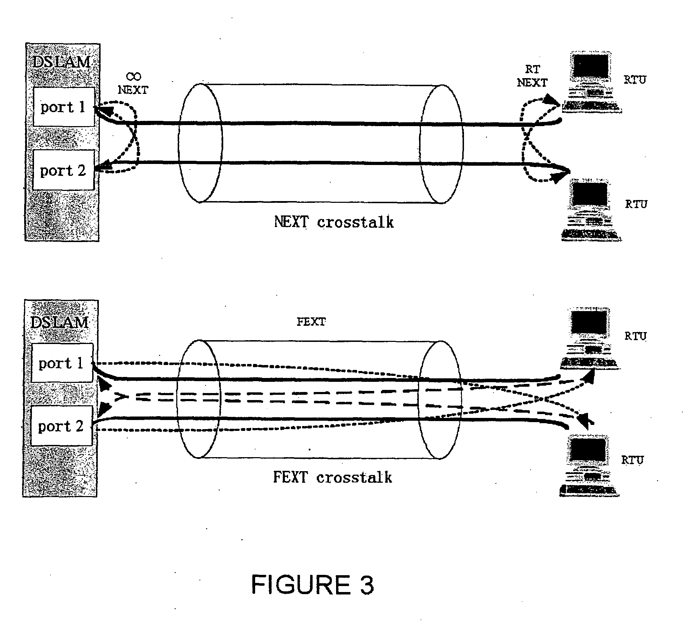

Figure 3 is a schematic diagram illustrating FEXT crosstalk and NEXT crosstalk;

Subscriber cabling basically comprises multiple (25 pairs or above) twisted pairs. A variety of different services may be run on each twisted pair. Different kinds of xDSL will create crosstalk between each other when working, and in some of these circuits, performance may drop drastically because of this crosstalk. When the line is quite long, some circuits basically cannot put any form of DSL into service. Crosstalk is the main factor affecting subscriber data rate in current DSL Modem (e.g. ADSL, VDSL) systems, and can be divided into far end crosstalk (FEXT) and near end crosstalk (NEXT), as shown in figure 3. Usually, the effect of NEXT is greater than that of FEXT, but in ADSL/VDSL, because upstream and downstream frequency segregation and frequency multiplexing is used, the effect of FEXT is far greater than that of NEXT; this is especially true in environments using a combination of CO/RT.

As shown in Figure 3, because xDSL upstream and downstream channels adopt frequency division multiplexing, near end crosstalk (NEXT) does not overly compromise system performance; however, far end crosstalk (FEXT) severely affects line transmission performance. When a cable contains many subscriber circuits that all require xDSL service, far end crosstalk (FEXT) will cause certain of those circuits to have a low data rate, unstable performance, and even the inability to establish the service. At the end, this may result in a low rate of line output at the DSLAM.

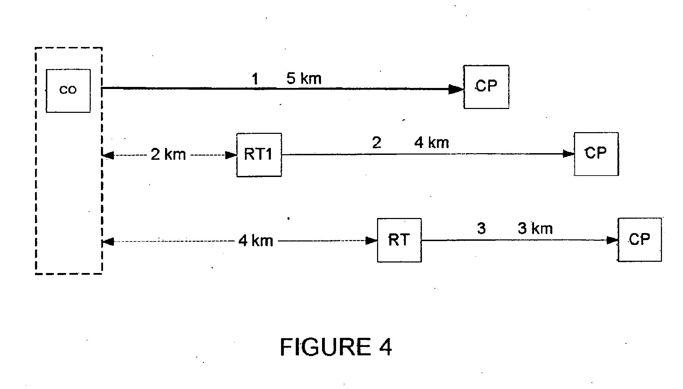

Figure 4 is a schematic diagram illustrating the technology for a combined CO/RT environment.

xDSL eliminates or reduces crosstalk by regulating the transmission power of each frequency band in order to help improve the data rate. The conventional model of regulating transmission power is called static spectrum management: it includes Flat Power Back-Off, the Reference PSD Method, Reference Noise Method, and so on. Dynamic Spectrum Management (DSM) was proposed in recent years as a method to more effectively manage power allocation. It overcomes the defects of static spectrum management by dynamically regulating to eliminate or reduce the effect of crosstalk between each subscriber. Especially in a situation where a CO/RT combination is used as the effect of short line to long line crosstalk is significant. As shown in figure 4, the crosstalk from line 2 to line 1 is far greater than that from line 1 to line 2. The dynamic spectrum management method can greatly reduce the effect of crosstalk and consequently improves data rate.

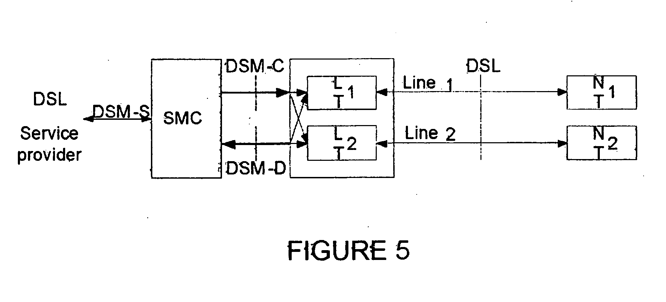

DSM technology is yet to be applied commercially. Figure 5 shows a schematic diagram illustrating a reference model for DSM related technology. At present, the mainstream structure for the first layer of DSM is as shown in Figure 5. It has a Spectrum Maintenance Center (SMC) and three control interfaces, respectively DSM-S, DSM-C, and DSM-D. The SMC reads operating parameters for the DSL line from DSL-LT via the DSM-D interface then exchanges data with its related SMC via the DSM-S interface. When the SMC has sufficient information, it performs a series of optimization algorithms and finally sends control parameters to make the line operate optimally.

Specifically, DSM automatically regulates the transmit power of each modem in the entire network to eliminate crosstalk. Especially in an environment with a combination CO/RT application as the effect of short line to long line crosstalk is significant. As shown in Figure 4, the effect of line 3 on line 1 is far greater than that of line 1 on line 3. The aim of DSM is to achieve a balance between maximizing the data rate of each modem and reducing its crosstalk effect on other modems.

In the existing xDSL standard, BIT table items and GAIN table items are used to indicate the bit rate and transmit power that can be carried by each carrier. Bit swapping technology achieves its aim by regulating the items in these two tables.

BIT table items are as shown in Table 1:

Table 1 : Bit Table

| TONE1 | TONE2 | TONE3 | TONE4 | ... | TONE NSC-1 |
|-------|-------|-------|-------|-----|------------|
| b1 | b2 | b3 | b4 | ... | b NSC-1 |

In the table, each bit table value 'b' represents the number of bits that can be carried in the corresponding xDSL line sub-frequency range 'TONE'. The standard stipulates a maximum of 15 in any item. The size of said number of bits determines the line speed for the corresponding sub-frequency range. Modifying the size of items in the BIT table can change the line speed of said sub-frequency range.

In practice, a BIT table item determines a single speed for one line. On the other hand, the line speed can be obtained from many different BIT table items, of which in certain preconditions there is only a single optimal BIT table item.

GAIN table items are as shown in Table 2:

Table 2: GAIN Table

| TONE1 | TONE2 | TONE3 | TONE4 | ... | TONE NSC-1 |
|-------|-------|-------|-------|-----|------------|
| g1 | g2 | g3 | g4 | ... | g NSC-1 |

In the table, each gain table value 'g' represents the data transmit power of the corresponding sub-frequency range 'TONE' in the xDSL line. The size of said power determines the data volume carried in the corresponding sub-frequency range. Modifying the size of items in the GAIN table changes the data transmit power of said sub-frequency range.

Even though the DSM method greatly reduces crosstalk through regulating transmission power, with users requiring faster speeds and ever more diverse requirements, their demand for upstream and downstream data rates change dynamically with actual applications. Existing DSL technology uses a fixed bandplan design, i.e. each subchannel is designated for upstream or downstream transmission in advance. However, in practice, subscriber demand for upstream and downstream transmission changes and varies, depending on the subscriber's actual application. This limitation makes the line unable to satisfy diverse subscriber requirements.

Therefore, people need a dynamic frequency spectrum management scheme that can dynamically regulate the data rate of each subscriber line based on subscriber demand.

WO 02/100008 A1 discloses methods, apparatus and systems for dynamically controlling a digital communication system. A line and signal characteristics device collects information about digital communication lines in the system and adaptively and/or dynamically determines line and signal characteristics of the digital communication lines, including interference effects. Based on the determined characteristics and the desired performance parameters, operation of the digital communication lines is adjusted by communication adaptation to improve or otherwise control the performance of the system.

Forouzan A.R. et al. disclose in "Generalized iterative spectrum balancing and grouped vectoring for maximal throughput digital subscriber lines" in IEEE GLOBECOM 2005, 28 November 2005, a centralized power allocation algorithm by generalizing a n iterative spectrum balancing algorithm.

Cendrillon R. et al. disclose in "Optimal multi-user spectrum management for digital subscriber lines" IEEE COMMUNICATIONS, 2004 IEEE INTERNATIONAL CONFERENCE ON PARIS, vol. 1, 20 June 2004, a centralized algorithm for optimal spectrum management in DSL.

BRIEF SUMMARY OF THE INVENTION

The present invention provides an xDSL upstream and downstream shared frequency dynamic frequency spectrum management method and device that dynamically regulates line transmission direction and transmits power based on actual subscriber requirements through Bandplan Design and Spectrum Coordination. Subscriber requirements for dynamically changing upstream and downstream data rate are thereby achieved and it effectively overcomes the limitations of upstream and downstream frequency in existing xDSL technology.

One aspect of the present invention presents a method of xDSL upstream and downstream shared frequency dynamic frequency spectrum management comprising a transmission channel model $y_k = H_k x_k + \sigma_k$ wherein $x_k$ is the input vector of the $k^{th}$ TONE, $y_k$ is the output vector of the $k^{th}$ TONE, $x_k$ and $y_k$ are both N-dimensional vectors, $H_k$ is an N*N transmission matrix of the $k^{th}$ TONE; and if the $m^{th}$ subscriber and the $n^{th}$ subscriber have the same direction on the $k^{th}$ TONE, then $h_k^{n,m}$ is the far end crosstalk function; if the transmission directions are opposite, then $h_k^{n,m}$ is the near end crosstalk function; and the following steps performed with the transmission channel model: Step a) Generate all feasible combinations of subchannels in both upstream and downstream directions for an xDSL line; Step b) Determine which combination of said combinations has an optimal spectrum coordination; and Step c) Adjust direction of transmission and transmit power of the xDSL line according to said optimal combination.

In the aforementioned method of xDSL upstream and downstream shared frequency dynamic frequency spectrum management, Step a) comprises the following steps: Traverse each subscriber $n = 1, 2, ..., N$ and each combination of subchannel $k = 1, 2, ..., K$ in the upstream and downstream directions to find out which combinations satisfy

$$\delta_{k,n}^{up} + \delta_{k,n}^{down} = 1 \text{ and } \delta_{k,n}^{up}, \delta_{k,n}^{down} \in \{0,1\},$$ these combinations then serve as feasible upstream and downstream direction combinations. Where $\delta_{k,n}^{up}$ denotes whether the $n^{th}$ subscriber and $k^{th}$ subchannel is an upstream transmission, $\delta_{k,n}^{up} = 1$ denotes upstream transmission, $\delta_{k,n}^{up} = 0$ denotes non-upstream transmission; $\delta_{k,n}^{down}$ denotes whether the $n^{th}$ subscriber and $k^{th}$ subchannel is a downstream transmission, $\delta_{k,n}^{down} = 1$ denotes downstream transmission, and $\delta_{k,n}^{down} = 0$ denotes non-downstream transmission.

In the aforementioned method ofxDSL upstream and downstream shared frequency dynamic frequency spectrum management, step b) comprises the following steps: Step b1) Find the optimal power allocation scheme for each of the combinations; and Step b2) Compare each of the optimal power combinations to obtain the best power combination among the optimal power allocation schemes, and set the best power combination of the optimal power allocation schemes as optimal combination.

In the aforementioned method of xDSL upstream and downstream shared frequency dynamic frequency spectrum management, Step b1) comprises the following steps: Step 1: Construct the mathematical model

$$J_k = w_1 b_k^{1,up} + w_2 b_k^{1,down} + \sum_{n=2}^{N} (\lambda_n^{up} b_k^{n,up} + \lambda_n^{down} b_k^{n,down}) - \sum_{n=1}^{N} \mu_n s_k^n,$$

of which, $s_k^n$ denotes the transmit power of the $k^{th}$ subchannel in the $n^{th}$ subscriber line; $w_1$ and $w_2$ are given fixed constants, $\lambda_n^{up}, \lambda_n^{down}$ and $\mu_n$ are respectively Lagrange operators; $b_k^{n,up}$ and $b_k^{n,down}$ respectively denote the number of bits that can be carried in each of the upstream and downstream channels in the $k^{th}$ subchannel of the $n^{th}$ subscriber line; and Step 2: For each of the feasible upstream and downstream combinations, traverse $s_k^n$ from 1 to $K$, applying δ as the minimum traversing interval, and with subchannel as the unit of recursion. Where, $k = 1, 2, ..., K$ and $n = 1, 2, ..., N$, then through iteration find the power allocation scheme making $J_k$ maximum and that satisfies the overall power limitation and data rate restriction for each subscriber line, then set that scheme as the optimal power allocation scheme.

In the aforementioned method of xDSL upstream and downstream shared frequency dynamic frequency spectrum management, Step 2) comprises the following steps:

Upon completion of traversing all subchannels, dynamically modify each weighting coefficient according to each of the following formulae:

$$\lambda_n^{up} = [\lambda_n^{up} + \varepsilon(R_{n,up}^{t\arg et} - R_n^{up})]^+, n = 2,...,N$$

$$\lambda_n^{down} = [\lambda_n^{down} + \varepsilon(R_{n,down}^{t\arg et} - R_n^{down})]^+, n = 2,...,N$$

$$\mu_n = [\mu_n + \varepsilon(\sum_{k=1}^{K} s_k^n - P_n)]^+, n = 1,...,N$$

until satisfying the overall power and data rate limitations of each subscriber line and a stable state is achieved. The power allocation scheme thereof is the power allocation scheme making $J_k$ maximum.

In the aforementioned method of xDSL upstream and downstream shared frequency dynamic frequency spectrum management, said Step 1) comprises the following steps:

When calculating $J_k$, obtain TONE noise $\sigma_k^n$ and channel attenuation function $h_k^{n,n}$ for the $k^{th}$ TONE; the noise $\sigma_k^n$ comprises background noise of said xDSL line and crosstalk noise from other xDSL circuits, and the loading bit rate can be calculated according to

$$b_k^n = \log_2(1 + \frac{|h_k^{n,n}|^2 s_k^n}{\sum_{m \neq n} |h_k^{n,m}|^2 s_k^m + \sigma_k^n})$$

Another aspect of the present invention provides a type ofxDSL upstream and downstream shared frequency dynamic frequency spectrum management device, comprising: Bandplan Design Module, used to generate all feasible upstream and downstream subchannel combinations for an xDSL line; Optimal Combination Assessment Module, used to determine the optimal spectrum coordination combination from among the combinations; and Regulation Module, used to adjust the direction of transmission and transmit power according to said optimal combination. The device uses a transmission channel model $y_k = H_k x_k + \sigma_k$ wherein $x_k$ is the input vector of the $k^{th}$ TONE, $y_k$ is the output vector of the $k^{th}$ TONE, $x_k$ and $y_k$ are both N-dimensional vectors, $H_k$ is an N*N transmission matrix of the $k^{th}$ TONE; and if the $m^{th}$ subscriber and the $n^{th}$ subscriber have the same direction on the $k^{th}$ TONE, then $h_k^{n,m}$ is the far end crosstalk function; if the transmission directions are opposite, then $h_k^{n,m}$ is the near end crosstalk function.

In the aforementioned xDSL upstream and downstream shared frequency dynamic frequency spectrum management device, said bandplan design module traverses each subscriber $n = 1, 2, ..., N$ and each combination of subchannel $k = 1, 2, ..., K$ in the upstream and downstream directions to find out which combinations satisfy $\delta_{k,n}^{up} + \delta_{k,n}^{down} = 1$ and $\delta_{k,n}^{up}, \delta_{k,n}^{down} \in \{0,1\}$, these combinations then serve as feasible upstream and downstream direction

combinations. Where $\delta_{k,n}^{up}$ denotes whether the $n^{th}$ subscriber and $k^{th}$ subchannel is an upstream transmission, , $\delta_{k,n}^{up} = 1$ denotes upstream transmission, $\delta_{k,n}^{up} = 0$ denotes non-upstream transmission; $\delta_{k,n}^{down}$ denotes whether the $n^{th}$ subscriber and $k^{th}$ subchannel is a downstream transmission, $\delta_{k,n}^{down} = 1$ denotes downstream transmission, and $\delta_{k,n}^{down} = 0$ denotes non-downstream transmission.

In the aforementioned xDSL upstream and downstream shared frequency dynamic frequency spectrum management device, the optimal combination assessment module comprises: Spectrum Coordination Module, used to find the optimal power allocation scheme from each of the combinations; and Comparison Module, used to compare each of the optimal power allocation schemes, obtain the best power combination among the optimal power allocation schemes, and set the best power combination of the optimal power allocation schemes as optimal combination.

In the aforementioned xDSL upstream and downstream shared frequency dynamic frequency spectrum management device, the spectrum coordination module comprises:

Model    Construction    Module,    used    to    construct    the    mathematic    model

$$J_k = w_1 b_k^{1,up} + w_2 b_k^{1,down} + \sum_{n=2}^{N}(\lambda_n^{up} b_k^{n,up} + \lambda_n^{down} b_k^{n,down}) - \sum_{n=1}^{N} \mu_n s_k^n ,$$ of which, $s_k^n$ denotes the transmit power of the $k^{th}$ subchannel in the $n^{th}$ subscriber line; $w_1$ and $w_2$ are given fixed constants, $\lambda_n^{up}$, $\lambda_n^{down}$ and $\mu_n$ are respectively Lagrange operators; $b_k^{n,up}$ and $b_k^{n,down}$ respectively denote the number of bits that can be carried in each of the upstream and downstream channels in the $k^{th}$ subchannel of the $n^{th}$ subscriber line; and Traversing Module, used to traverse all $s_k^n$ from 1 to $K$ for each of the feasible upstream and downstream combinations, applying δ as the minimum traversing interval, and with subchannel as the unit of recursion. Where, $k$= 1, 2,....,$K$ and $n$= 1,2,..., $N$, then through iteration find the power allocation scheme making $J_k$ maximum and that satisfies the overall power limitation and data rate restriction for each subscriber line, then set this scheme as the optimal power allocation scheme.

In the aforementioned xDSL upstream and downstream shared frequency dynamic frequency spectrum management device, the traversing module is also used upon completion of traversing all subchannels to dynamically modify each weighting coefficient according to -each of the following formulae:

$$\lambda_n^{up} = [\lambda_n^{up} + \varepsilon(R_{n,up}^{target} - R_n^{up})]^+, n = 2,...,N$$

$$\lambda_n^{down} = [\lambda_n^{down} + \varepsilon(R_{n,down}^{target} - R_n^{down})]^+, n = 2,...,N$$

$$\mu_n = [\mu_n + \varepsilon(\sum_{k=1}^{K} s_k^n - P_n)]^+, n = 1,...,N$$

until satisfying the overall power and data rate limitations of each subscriber line and a stable state is achieved. This power allocation scheme is the power allocation scheme making $J_k$ maximum.

In the aforementioned method of xDSL upstream and downstream shared frequency dynamic frequency spectrum management, said Step 1) comprises the following steps:

When calculating $J_k$, obtain subchannel noise $\sigma_k^n$ and channel attenuation function $h_k^{n,n}$ for the $k^{th}$ subchannel; the noise $\sigma_k^n$ comprises background noise of the xDSL line and crosstalk noise from other xDSL circuits, and the loading bit rate can be calculated according to $b_k^n = \log_2(1 + \dfrac{|h_k^{n,n}|^2 s_k^n}{\sum\limits_{m \neq n} |h_k^{n,m}|^2 s_k^m + \sigma_k^n})$ .

Through the aforementioned technical scheme, the present invention achieves the following results:

The present invention provides an xDSL upstream and downstream shared frequency dynamic frequency spectrum management method and device that dynamically regulates line transmission direction and transmits power based on actual subscriber requirements through Bandplan Design and Spectrum Coordination. Subscriber requirements for dynamically changing upstream and downstream data rate are thereby achieved.

Other characteristics and advantages of the present invention are elaborated on in the following specification. Moreover, some are easy to see from the specification or understand through the implementation of the present invention. The objectives and other advantages of this invention may be implemented and obtained from the text of the specification, claims, and specially referenced structures in attached figures.

BRIEF DESCRIPTION OF THE DRAWINGS

The attached figures described herein are provided to further clarify the present invention and constitute an integral part of this application. The demonstrative implementation example and its specification are used to explain this invention and do not constitute any improper circumscription to the present invention. In the attached figures:

Figure 1 is a schematic diagram illustrating a reference model for an xDSL system;

Figure 2 is a schematic diagram illustrating the three main frequency spectrum division plans of VDSL2;

Figure 3 is a schematic diagram illustrating FEXT and NEXT crosstalk in VDSL2;

Figure 4 is a schematic diagram illustrating a combined environment of CO/RT users;

Figure 5 is a schematic diagram illustrating a DSM reference model;

Figure 6 is a schematic diagram illustrating a method for xDSL upstream and downstream shared frequency dynamic frequency spectrum management;

Figure 7 is a schematic diagram illustrating a device for xDSL upstream and downstream shared frequency dynamic frequency spectrum management;

Figure 8 is a schematic diagram illustrating an implementation example of a multi-subscriber environment for the present invention; and

Figure 9 is a schematic diagram illustrating a method for xDSL upstream and downstream shared frequency dynamic frequency spectrum management for the multi-subscriber environment in Figure 8.

DETAILED DESCRIPTION OF THE INVENTION

Embodiments for Implementation

The following reference diagram specifies the present invention.

The idea behind the present invention is the overall design and optimization of the frequency domain and power in order to adapt to actual changes in subscriber requirements. It allows dynamic regulations of line transmission direction and transmits power to achieve subscriber requirements for dynamic changes to upstream and downstream data rate.

Former technology did not consider the simultaneous use of upstream and downstream, whereas the present invention proposes considering the simultaneous use of upstream and downstream. Below, we specifically explain a mathematical model that the present invention proposes in order to resolve the problem of simultaneously using upstream and downstream.

When implementing power allocation and regulation, the following transmission channel model is used. In a communications model using discrete multi tone (DMT) with $n$ subscribers and $k$ TONES (subchannels), the transmission signal of each tone can be independently expressed as:

$$y_k = H_k x_k + \sigma_k \qquad\qquad (1)$$

$x_k$ is the input vector of the $k^{th}$ TONE, $Y_k$ is the output vector of the $k^{th}$ TONE, and $x_k$ and $y_k$ are both N dimension vectors. $H_k$ is an N*N transmission matrix of the $k^{th}$ TONE. If the $m^{th}$ subscriber and $n^{th}$ subscriber have the same direction on the $k^{th}$ TONE, then $h_k^{n,m}$ is the far end crosstalk function; if the transmission directions are opposite, then $h_k^{n,m}$ is the near end crosstalk function. Supposing each modem regards interference from each other modem as noise, the data rate at which the $n^{th}$ subscriber can achieve can be calculated using the Shannon channel capacity theorem:

$$b_k^n = \log_2\left(1 + \frac{\left|h_k^{n,n}\right|^2 s_k^n}{\sum_{m \neq n}\left|h_k^{n,m}\right|^2 s_k^m + \sigma_k^n}\right)$$

$$(2)$$

Dynamic frequency spectrum management can be described as follows: The overall transmitted power of each online subscriber must satisfy definite limitations; the transmitted power on a single TONE must satisfy frequency spectrum density limitations. Stipulating upstream and downstream data rate for the $2^{nd}$ to the $n^{th}$ subscriber must achieve a definite numerical value. The objective is to optimize the weighted upstream and downstream rate of the $1^{st}$ subscriber line. Limitations and objectives can be correspondingly regulated according to changes in actual requirements. The dynamic frequency spectrum management problem is to maximize target functional values under the precondition of satisfying the aforementioned limitations, by regulating the transmission direction and transmitting power for each TONE of each subscriber.

Using $\delta^{up}{}_{k,n}$ and $\delta^{down}{}_{k,n}$ to denote upstream and downstream transmission of the $n^{th}$ subscriber on the $k^{th}$ TONE, its adopted value is 0 or 1. $\delta^{up}{}_{k,n} = 1$ denotes upstream transmission, $\delta^{down}{}_{k,n} = 1$ denotes downstream transmission, the second satisfies $\delta^{up}{}_{k,n} + \delta^{down}{}_{k,n} = 1$, namely each TONE can only transmit upstream or downstream at any one time; $s^n_k$ is the power allocation of the $k^{th}$ TONE, its obtained value must satisfy PSD mask limitations. Where,

$$h_k^{n,m} = \begin{cases} h_{k,FEXT}^{n,m}, & if(\delta_{k,m}^{up} = \delta_{k,n}^{up}); \\ h_{k,NEXT}^{n,m}, & if(\delta_{k,m}^{up} \neq \delta_{k,n}^{up}). \end{cases}$$ namely if transmission of the $m^{th}$ subscriber and $n^{th}$ subscriber on the $k^{th}$

TONE are the same direction, then $h^{n,m}_k$ is the far end crosstalk function; if the transmission directions are opposite, then $h^{n,m}_k$ is the near end crosstalk function. Said function can be obtained through line physical characteristics and topological structure.

Consequently, the present invention proposes that a mathematical form for the DSM problem can be described as follows.

$$\max_{s_1,\ldots,s_N} w_1 R_1^{up} + w_2 R_1^{down}$$

$$s.t. R_n^{up} \geq R_{n,up}^{t\,arg\,et}, R_n^{down} \geq R_{n,down}^{t\,arg\,et}, n = 2,3,\ldots,N$$

$$s.t. \sum_{k=1}^{K} s_k^n \leq P_n, n = 1,2,\ldots,N$$

$$s.t. 0 \leq s_k^n \leq s_{\max}, k = 1,\ldots,K; n = 1,\ldots,N$$

$$s.t. \delta_{k,n}^{up} + \delta_{k,n}^{down} = 1, \delta_{k,n}^{up}, \delta_{k,n}^{down} \in \{0,1\}, k = 1,2,\ldots K; n = 1,2,\ldots N$$

$$(3)$$

where,

$$R_n^{up} = \sum_{k=1}^{K} b_k^n \delta_{k,n}^{up}, \quad R_n^{down} = \sum_{k=1}^{K} b_k^n \delta_{k,n}^{down};$$

$R^{target}{}_{n,up}$, $R^{trget}{}_{n,down}$, $P_n$, $W_1$, $W_2$ and $S_{max}$ are all given constants;

In the present invention, for DSM, the upstream and downstream transmission direction for any one TONE in the initialization phase can be determined according to the dynamic regulation of a subscriber's actual application, the upstream and downstream transmission direction is no longer fixed as in Figure 1. Therefore, the optimization variables comprise $\delta^{up}{}_{k,n}$, $\delta^{down}{}_{k,n}$ and $S^n_k$ ($k=1,2,\ldots,K$; $n= 1,2,\ldots,N$). Said model can be understood as DSM that permits upstream and downstream to share use of a frequency domain. This problem can be solved by using the pairing method, introducing Lagrange weight coefficients. Formula (3) can be transformed into:

$$\max_{s_1,\ldots,s_N} w_1 R_1^{up} + w_2 R_1^{down} + \sum_{n=2}^{N} (\lambda_n^{up} R_n^{up} + \lambda_n^{down} R_n^{down}) - \sum_{n=1}^{N} \sum_{k=1}^{K} \mu_n s_k^n$$

$$s.t. 0 \le s_k^n \le s_{max}, k = 1,\ldots,K; n = 1,\ldots,N$$

$$s.t. \delta_{k,n}^{up} + \delta_{k,n}^{down} = 1, \delta_{k,n}^{up}, \delta_{k,n}^{down} \in \{0,1\}, k = 1,2,\ldots K; n = 1,2,\ldots N \tag{4}$$

Where,

$S_k^n$ denotes the transmit power of the $k^{th}$ TONE on the $n^{th}$ subscriber line;

$\sigma_k^n$ denotes the noise signal received by the $n^{th}$ subscriber on the $k^{th}$ TONE; and

$W_1$ and $W_2$ are all given constants,

$\lambda_n^{up}$, $\lambda_n^{down}$ and $\mu_n$ : are respectively Lagrange operators;

$b_k^{n,up}$ and $b_k^{n,down}$ : respectively denote the number of bits that can be carried upstream and downstream on the $k^{th}$ TONE of the $n^{th}$ subscriber line.

$\delta_{k,n}^{up}$ denotes whether the $n^{th}$ subscriber of the $k^{th}$ subchannel is upstream transmission, only when $\delta_{k,n}^{up} = 1$ denotes upstream transmission;

$\delta_{k,n}^{down}$ denotes whether the $n^{th}$ subscriber of the $k^{th}$ subchannel is downstream transmission, only when $\delta_{k,n}^{down} = 1$ denotes downstream transmission.

$R_n^{target}$ is the target line rate.

Formula (4) can be reduced and resolved as an independent target function of the $k^{th}$ TONE, using $J_k$ to denote the coefficient of the $k^{th}$ TONE in Formula (4):

$$J_k = w_1 b_k^{1,up} + w_2 b_k^{1,down} + \sum_{n=2}^{N} (\lambda_n^{up} b_k^{n,up} + \lambda_n^{down} b_k^{n,down}) - \sum_{n=1}^{N} \mu_n s_k^n \tag{5}$$

where,

$S_k^n$ denotes the transmit power of the $k^{th}$ TONE on the $n^{th}$ subscriber line;

$W_1$ and $W_2$ are given constants,

$\lambda_n^{up}$, $\lambda_n^{down}$ and $\mu_n$ are respectively Lagrange operators;

$b_k^{n,up}$ and $b_k^{n,down}$: respectively denote the number of bits that can be carried upstream and downstream on the $k^{th}$ TONE of the $n^{th}$ subscriber line.

$\delta_{k,n}^{up}$ denotes whether the $n^{th}$ subscriber of the $k^{th}$ subchannel is upstream transmission, only when $\delta_{k,n}^{up} = 1$ denotes upstream transmission;

$\delta_{k,n}^{down}$ denotes whether the $n^{th}$ subscriber of the $k^{th}$ subchannel is downstream transmission, only when $\delta_{k,n}^{down} = 1$ denotes downstream transmission.

Consequently, the maximum value of formula (5) can be obtained by enumerating all values of transmission direction and transmitting power for each TONE, then dynamically regulating each weighting coefficient value. This process is reiterated until each limit is satisfied and calculations converge.

From the above, it is clear that the present inventions uses the dual method in the derivation process from formulae (3) to (5) (See, Cendrillon, W. Yu, M. Moonen, J. Verlinden, and T. Bostoen, "Optimal multi-subscriber spectrum management for digital subscriber lines," accepted by IEEE Transactions on Communications, 2005.) However, this invention proposes a new mathematic model. The difference between this invention and existing technology is that existing technology only considers power allocation in a fixed bandplan, and completely neglects to take into consideration shared use of the frequency domain by upstream and downstream. Consequently, the mathematical model in formula (3) is completely different from the mathematical model in existing technology.

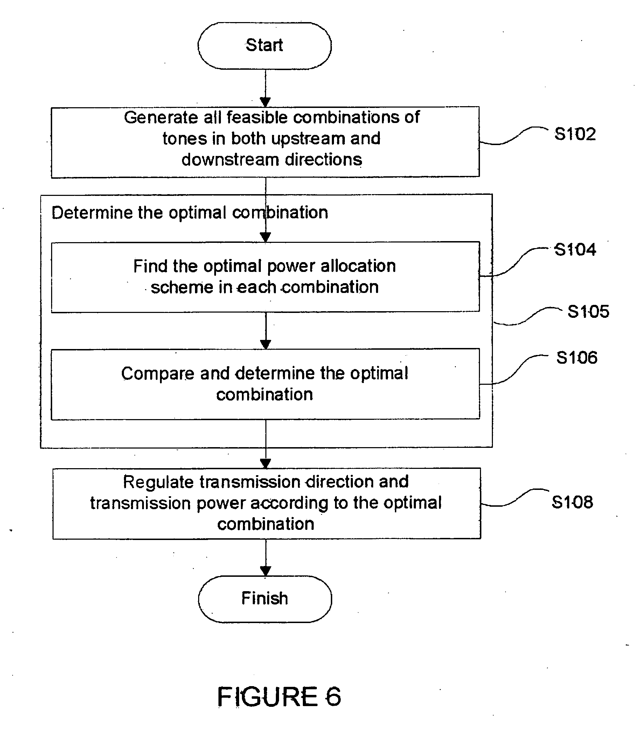

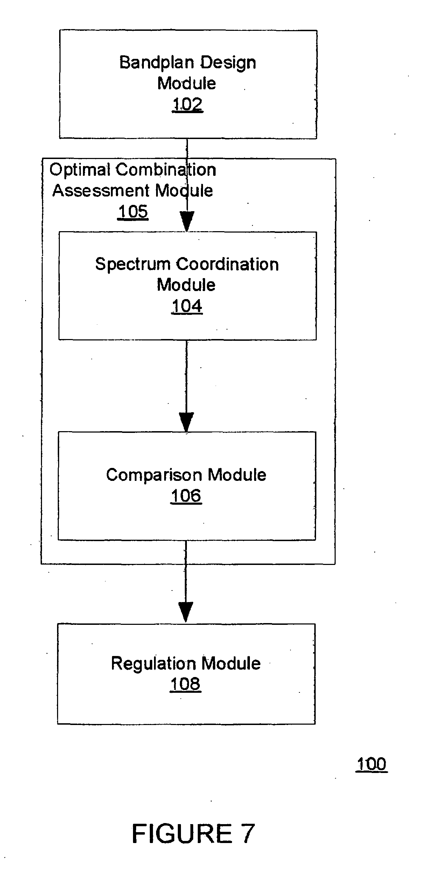

The present invention is proposed in accordance with the above analysis. The following refers to Figure 6 and 7 to describe in detail the method and device for xDSL upstream and downstream shared frequency dynamic frequency spectrum management.

Figure 6 is a schematic diagram illustrating a method for xDSL upstream and downstream shared frequency dynamic frequency spectrum management according to the present invention; Figure 7 is a schematic diagram illustrating an xDSL upstream and downstream shared frequency dynamic frequency spectrum management device (100).

As shown in Figure 6, a method for xDSL upstream and downstream shared frequency dynamic frequency spectrum management, comprising the following steps:

Step S102, generate all feasible combinations of TONE in both upstream and downstream directions for an xDSL line;

Step S105, Determine which combination of said combinations has an optimal spectrum coordination; and

Step S108: adjust direction of transmission and transmit power of the xDSL line according to said optimal combination.

Optional, step S105 includes the following steps

Step S 104, find the optimal power allocation scheme in each combination, wherein it is optional to construct the mathematic model

$$J_k = w_1 b_k^{1,up} + w_2 b_k^{1,down} + \sum_{n=2}^{N} (\lambda_n^{up} b_k^{n,up} + \lambda_n^{down} b_k^{n,down}) - \sum_{n=1}^{N} \mu_n s_k^n ,$$

of which, $S_k^n$ denotes the transmit power of the $k^{th}$ TONE in the $n^{th}$ subscriber line; $w_1$ and $w_2$ are given fixed constants, $\lambda_n^{up}$, $\lambda_n^{down}$ and $\mu_n$ are respectively Lagrange operators; $b_k^{n,up}$ and $b_k^{n,down}$ respectively denote the number of bits that can be carried in each of the upstream and downstream channels in the $k^{th}$ TONE of the $n^{th}$ subscriber line. Use said mathematical model to find the optimal power allocation scheme in each type of combination; and

Step S106, compare each of the optimal power allocation schemes, obtain the best power allocation scheme among the optimal power allocation schemes, and set the best power combination of the optimal power allocation schemes as optimal combination.

From the above method it can be seen that Step S102 is used to implement band planning, step 104 is used to implement spectrum coordination; from Step S 102 to Step S106 integrates band planning and spectrum coordination, thus dynamically regulating line transmission direction and transmitting power according to actual subscriber requirements and achieving the subscriber's requirement for dynamic change to upstream and downstream data rate.

As shown in figure 7, an xDSL upstream and downstream shared frequency dynamic frequency spectrum management device (100) according to the present invention, comprising:

Bandplan Design Module (102), used to generate all feasible upstream and downstream TONE combinations for an xDSL line;

Optimal Combination Assessment Module (105), used to determine the optimal spectrum coordination combination from among the combinations; and

Regulation Module (108), used to modify the direction of transmission and transmit power according to said optimal combination.

Optionally, the optimal combination assessment module (105) comprises:

Spectrum Coordination Module (104), used to find the optimal power allocation scheme from each of the combinations; and

Comparison Module (106), used to compare each of the optimal power allocation schemes, obtain the best power combination among the optimal power allocation schemes, and set the best power combination of the optimal power allocation schemes as optimal combination spectrum.

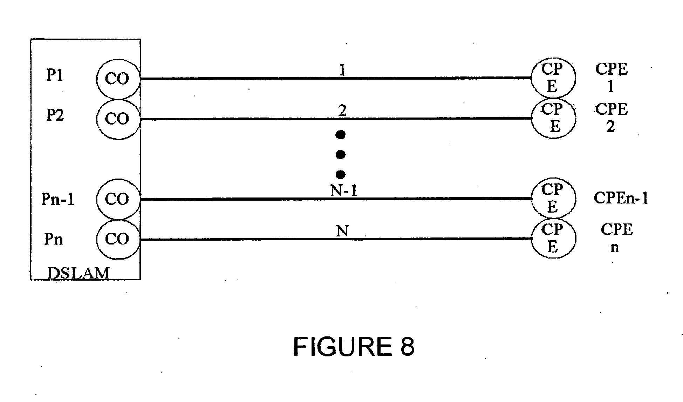

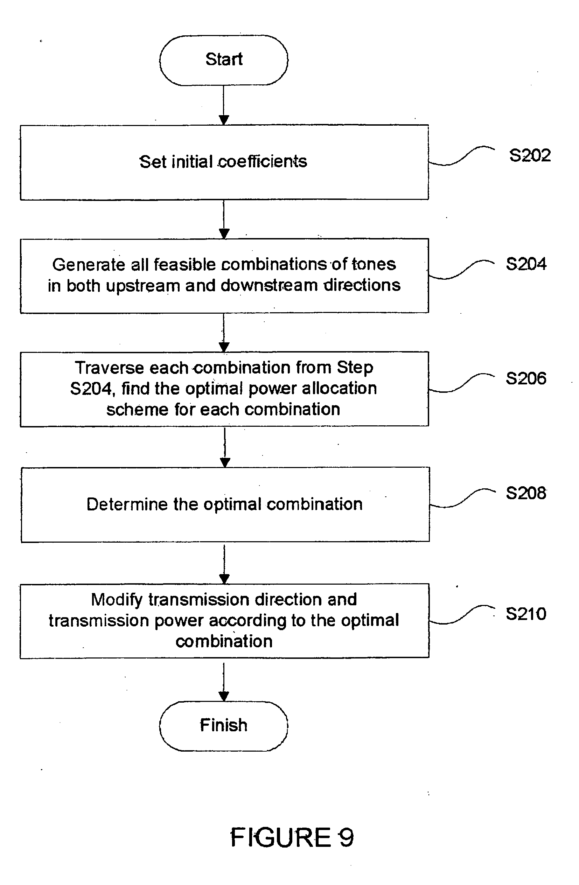

The following combines figures 8 and 9 to describe in detail an implementation example for an xDSL upstream and downstream shared frequency dynamic frequency spectrum management method.

Figure 8 is a schematic diagram illustrating an implementation example of a multi-subscriber environment for the present invention; and

Figure 9 is a schematic diagram illustrating a method for xDSL upstream and downstream shared frequency dynamic frequency spectrum management for the multi-subscriber environment in Figure 8;

For the multi-subscribers case shown in Figure 8, suppose that all connections are operating normally and each pair of transceivers already has a predetermined bit table value (B) and a PSD allocated for every tone. Here, we consider maximizing the upstream and downstream data rate weighting coefficient for the first line in Figure 5. Therefore, Figure 9 is a schematic diagram illustrating a method for xDSL upstream and downstream shared frequency dynamic frequency spectrum management for the multi-subscriber environment in Figure 8, comprising the following steps:

Step S202: Initialize the following parameters: $\lambda_n^{up}$, $\lambda_n^{down}$ and $\mu_n$, $\varepsilon$, power regulation interval $\delta$, $R_{n,up}^{target}$, $R_{n,down}^{target}$, $P_n$, $w_1$, $w_2$ and $s_{max}$

Step S204: Generate all feasible combinations of TONE in both upstream and downstream directions.

First, cycle the outermost layer, traverse each TONE combination in both upstream and downstream direction. That is, for all $k$=1, 2,...,K and n=1,2,...,N, traverse all combinations that satisfy $\delta^{up}{}_{k,n}$ and $\delta^{down}{}_{k,n}$ =1 and $\delta^{up}{}_{k,n} \in \{0,1\}$;

Step S206: Traverse each upstream and downstream assembly in step S204, find the optimal power allocation scheme in each assembly;

Step S10: For each upstream and downstream combination in step S204, take TONE as the unit of iteration (from 1 to K), take $\delta$ as minimum interval and traverse all $S^n{}_k$ ($k$ =1, 2,..., K; $n$ =1, 2, ..., N), i.e. $S^n{}_k$ can substitute values of $(0, \delta, 2\delta,..., S_{max})$, altogether making $|S_{max}{}^{/\delta + 1}|$ substitutions. Find the power allocation scheme that maximizes $J_k$ in formula (5). When calculating $J_k$, obtain the noise $(\sigma^n{}_k)$ of the $k^{th}$ TONE and channel attenuation function $h^{n,n}{}_k$ according to specifications in the G.997.1 standard. Noise $\sigma^n{}_k$ comprises line background noise and crosstalk from other circuits. Carried bit rate can be calculated according to formula (2).

Step S20: when all TONES have been traversed, dynamically modify all weight coefficients according to the following formulae;

$$\lambda_n^{up} = [\lambda_n^{up} + \varepsilon(R_{n,up}^{t\arg et} - R_n^{up})]^+, n = 2,...,N$$

$$\lambda_n^{down} = [\lambda_n^{down} + \varepsilon(R_{n,down}^{t\arg et} - R_n^{down})]^+, n = 2,...,N$$

$$\mu_n = [\mu_n + \varepsilon(\sum_{k=1}^{K} s_k^n - P_n)]^+, n = 1,...,N$$

.

Repeat step S206 until all limiting conditions are satisfied and a stable state is achieved. When the value of each weighting coefficient in Step S20 remains unchanged, it denotes that allocation for the entire spectrum has achieved a stable state. At this point it can be taken that power allocation has achieved a point of equilibrium.

Step S208: Find the optimal combination:

Compare all the optimal power allocation schemes obtained in S206, obtain the best power combination among the optimal power allocation schemes, and set the best power combination of the optimal power allocation schemes as the optimal combination. Of these, the optimal scheme is the scheme that maximizes the objective function $w_1 R^{up}{}_1$ + $w_2 R^{down}{}_1$ in formula 5.

Step S210 : Modify the line transmission direction and transmit power according to said optimal combination, thereby allowing dynamic regulation based on actual subscriber requirements.

From the above implementation example it can be seen that this invention guarantees the optimal power allocation by introducing Lagrange factors and adopting the dual method. In a situation where the number of subscribers is not overly large, this invention can be implemented effectively. In addition, calculations can be simplified through iteration, such as in the document R. Cendrillon and M. Moonen, "Iterative spectrum balancing for digital subscriber lines," Proc. IEEE ICC, 2005, the document W. Yu, G. Ginis, and J. Cioffi, "Distributed multi-subscriber power control for digital subscriber lines," IEEE Journal on Selected, Areas in Communication, vol. 20, no. 5, pp. 1105-1115, June 2002 and the ISB, IW and ASB methods found in the document J. Huang, R. Cendrillon and M. Chiang, "Autonomous spectrum balancing (ASB) for frequency selective interference channels". For a person skilled in the art, the present invention can be easily extended to the above three methods.

In the above embodiments for implementation, it is taken that all subchannels can dynamically regulate transmission direction to achieve subscriber rate requirements. However, in practice, certain frequency ranges can be fixed and only a section of frequency ranges permitted to dynamically change transmission direction. This is also capable of satisfying subscriber requirements. Mathematical models and solutions can be simply extended by the scheme described in said implementation example, i.e. fixing the transmission direction of certain TONES. It is worth noting that the above implementation example is merely one specific example of the present invention and is not to be construed as limiting the protection scope thereof.

From the above description it can be seen that this invention achieves the following results:

The present invention provides an xDSL upstream and downstream shared frequency dynamic frequency spectrum management method and device that dynamically regulates line transmission direction and transmits power based on actual subscriber requirements through Bandplan Design and Spectrum Coordination. Subscriber requirements for dynamically changing upstream and downstream data rate are thereby achieved.

The aforementioned merely describes a preferred implementation of the present invention and is not used to circumscribe this invention in any way.

**Claims**

1. A method for dynamic spectrum management of xDSL upstream and downstream shared frequency, **characterized by** comprising a transmission channel model $y_k = H_k x_k + \sigma_k$ wherein is an input vector of the $k^{th}$ TONE, $y_k$ is an output vector of the $k^{th}$ TONE, $x_k$ and $y_k$ are both N-dimensional vectors, $H_k$ is an N*N transmission matrix of the $k^{th}$ TONE; and if the $m^{th}$ subscriber and the $n^{th}$ subscriber have the same transmission direction on the $k^{th}$ TONE, then $h_k^{n,m}$ is a far end crosstalk function; if the transmission directions are opposite, then $h_k^{n,m}$ is a near end crosstalk function;
and the following steps performed with the transmission channel model:

   step a: generating all feasible combinations of subchannels in both upstream and downstream directions for an xDSL line;
   step b: determining an optimal spectrum coordination combination from said combinations; and
   step c: adjusting a transmission direction and a transmission power of said xDSL line according to said optimal combination.

2. The method for dynamic spectrum management of xDSL upstream and downstream shared frequency according to claim 1, wherein said step a comprises the following steps:

   traversing all subscribers $n = 1, 2, ..., N$ and all subchannels $k = 1, 2, ..., k$ in the upstream and downstream directions, finding out all combinations that satisfy $\delta_{k,n}^{up} + \delta_{k,n}^{down} = 1$ and $\delta_{k,n}^{up}, \delta_{k,n}^{down} \in \{0,1\}$, said combinations serving as said feasible upstream and downstream combinations;

   wherein, $\delta_{k,n}^{up}$ denotes whether the $n^{th}$ subscriber on the $k^{th}$ subchannel is an upstream transmission, $\delta_{k,n}^{up} = 1$ denotes the upstream transmission, $\delta_{k,n}^{up} = 0$ denotes a non-upstream transmission; $\delta_{k,n}^{down}$ denotes whether the $n^{th}$ subscriber on the $k^{th}$ subchannel is a downstream transmission, $\delta_{k,n}^{down} = 1$ denotes the downstream transmission, and $\delta_{k,n}^{down} = 0$ denotes a non-downstream transmission.

3. The method for dynamic spectrum management of xDSL upstream and downstream shared frequency according to claim 2, wherein said step b comprises the following steps:

   step b1: finding an optimal power allocation scheme for each of said combinations; and
   step b2: comparing all of said optimal power allocation schemes, obtaining the most optimal power allocation scheme, and determining a combination with said most optimal power allocation scheme as said optimal combination.

4. The method for dynamic spectrum management of xDSL upstream and downstream shared frequency according to claim 3, wherein said step b1 comprises the following steps:

   step 1: constructing a mathematical model

$$ J_k = w_1 b_k^{1,up} + w_2 b_k^{1,down} + \sum_{n=2}^{N} (\lambda_n^{up} b_k^{n,up} + \lambda_n^{down} b_k^{n,down}) - \sum_{n=1}^{N} \mu_n s_k^n , $$

   step 2: for all of said feasible combinations in the upstream and downstream directions, traversing all from 1 to $k$, applying $\delta$ as a minimum traversing interval and a subchannel as a unit of recursion, wherein $k = 1, 2, ..., k$ and $n = 1, 2, ..., N$, finding through iteration a power allocation scheme that maximizes $J_k$ and satisfies an overall power limitation of each subscriber line and a data rate limitation for each subscriber line, and determining the power allocation scheme as said optimal power allocation scheme.

5. The method for dynamic spectrum management of xDSL upstream and downstream shared frequency according to claim 4, wherein said step 2 comprises the following steps:

after completion of the traversing all said subchannels, dynamically modifying each weighting coefficient according to each of the following formulae:

$$\lambda_n^{up} = [\lambda_n^{up} + \varepsilon(R_{n,up}^{t\arg et} - R_n^{up})]^+, n = 2,...,N \ ,$$

$$\lambda_n^{down} = [\lambda_n^{down} + \varepsilon(R_{n,down}^{t\arg et} - R_n^{down})]^+, n = 2,...,N \ ,$$

$$\mu_n = [\mu_n + \varepsilon(\sum_{k=1}^{K} s_k^n - P_n)]^+, n = 1,...,N \ ,$$

until satisfying the overall power for the each subscriber line and the data rate limitation for the each subscriber line and achieving a stable state, the obtained power allocation scheme being said power allocation scheme that maximizes $J_k$.

6. The method for dynamic spectrum management of xDSL upstream and downstream shared frequency according to claim 4, wherein said step 1 comprises the following steps:

when calculating the $J_k$, obtaining a subchannel noise $\sigma_k^n$ and a channel attenuation function $h_k^{n,n}$ for the $k^{th}$ subchannel; said noise $\sigma_n^k$ including a background noise of said xDSL line and a crosstalk noise from other xDSL lines, the loading bit rate being calculated according to $b_k^n = \log_2(1 + \dfrac{\left|h_k^{n,n}\right|^2 s_k^n}{\sum_{m \neq n}\left|h_k^{n,m}\right|^2 s_k^m + \sigma_k^n})$.

7. A device for dynamic spectrum management ofxDSL upstream and downstream shared frequency, **characterized by** comprising:

a bandplan design module, used to generate all feasible combinations of subchannels in both upstream and downstream directions for an xDSL line;
an optimal combination determination module, used to determine an optimal spectrum coordination combination from said combinations; and
an adjustment module, used to adjust a transmission direction and a transmission power of said xDSL line according to said optimal combination;
wherein the device uses a transmission channel model $y_k = H_k x_k + \sigma_k$ wherein $x_k$ is an input vector of the $k^{th}$ TONE, $y_k$ is an output vector of the $k^{th}$ TONE, $x_k$ and $y_k$ are both N-dimensional vectors, $H_k$ is an N*N transmission matrix of the $k^{th}$ TONE; and if the $m^{th}$ subscriber and the $n^{th}$ subscriber have the same transmission direction on the $k^{th}$ TONE, then $h_k^{n,m}$ is a far end crosstalk function;

if the transmission directions are opposite, then $h_k^{n,m}$ is a near end crosstalk function.

8. The device for dynamic spectrum management of xDSL upstream and downstream shared frequency according to claim 7, wherein said bandplan design module traverses all subscribers $n = 1, 2, ..., N$ and all subchannels $k =$

1,2, ..., $k$ in the upstream and downstream directions, finds out all combinations that satisfy $\delta_{k,n}^{up} + \delta_{k,n}^{down} = 1$ and $\delta_{k,n}^{up}, \delta_{k,n}^{down} \in \{0,1\}$, said combinations serving as said feasible upstream and downstream combinations; wherein, $\delta_{k,n}^{up}$ denotes whether the $n^{th}$ subscriber on the $k^{th}$ subchannel is an upstream transmission, $\delta_{k,n}^{up} = 1$ denotes the upstream transmission, $\delta_{k,n}^{up} = 0$ denotes a non-upstream transmission; $\delta_{k,n}^{down}$ denotes whether the $n^{th}$ subscriber on the $k^{th}$ subchannel is a downstream transmission, $\delta_{k,n}^{down} = 1$ denotes the downstream transmission, and $\delta_{k,n}^{down} = 0$ denotes a non-downstream transmission.

9. The device for dynamic spectrum management ofxDSL upstream and downstream shared frequency according to claim 8, wherein said optimal combination determination module comprises:

    a spectrum coordination module, used to find an optimal power allocation scheme for each of said combinations; and
    a comparison module, used to compare all of said optimal power allocation schemes, obtain the most optimal power allocation scheme, and determine a combination of transmission directions with said most optimal power allocation scheme as said optimal combination.

10. The device for dynamic spectrum management of xDSL upstream and downstream shared frequency according to claim 9, wherein said spectrum coordination module comprises:

    a model construction module, used to construct a mathematical model

$$J_k = w_1 b_k^{1,up} + w_2 b_k^{1,down} + \sum_{n=2}^{N} (\lambda_n^{up} b_k^{n,up} + \lambda_n^{down} b_k^{n,down}) - \sum_{n=1}^{N} \mu_n s_k^n ,$$

wherein, $s_k^n$ denotes a transmission power for the $k^{th}$ subchannel on the $n^{th}$ subscriber line; $w_1$ and $w_2$ are given constants, $\lambda_n^{up}$, $\lambda_n^{down}$ and $\mu_n$ are respectively Lagrange operators; $b_k^{n,up}$ and $b_k^{n,down}$ respectively denote the number of bits that can be carried in the upstream direction and the downstream direction in the $k^{th}$ subchannel on the $n^{th}$ subscriber line; and
    a traversing module, used to, for all of said feasible combinations in the upstream and downstream directions, traverse all $s_k^n$ from 1 to $k$, applying $\delta$ as a minimum traversing interval and a subchannel as a unit of recursion, wherein $k = 1, 2, ..., k$ and $n = 1, 2, ..., N$, find through iteration a power allocation scheme that maximizes $J_k$ and satisfies an overall power limitation of each subscriber line and a data rate limitation for each subscriber line, and determine the power allocation scheme as said optimal power allocation scheme.

11. The device for dynamic spectrum management of xDSL upstream and downstream shared frequency according to claim 10, wherein said traversing module is also used to, after completion of the traversing all said subchannels, dynamically modify each weighting coefficient according to each of the following formulae:

$$\lambda_n^{up} = [\lambda_n^{up} + \varepsilon(R_{n,up}^{target} - R_n^{up})]^+, n = 2, ..., N ,$$

$$\lambda_n^{down} = [\lambda_n^{down} + \varepsilon(R_{n,down}^{target} - R_n^{down})]^+, n = 2, ..., N ,$$

$$\mu_n = [\mu_n + \varepsilon(\sum_{k=1}^{K} s_k^n - P_n)]^+, n = 1, ..., N$$

,

until satisfying the overall power for the each subscriber line and the data rate limitation for the each subscriber line and achieving a stable state, the obtained power allocation scheme being said power allocation scheme that maximizes $J_k$.

12. The device for dynamic spectrum management of xDSL upstream and downstream shared frequency according to claim 10, wherein said model construction module, when calculating $J_k$, obtains a subchannel noise $\sigma_k^n$ and a channel attenuation function $h_k^{n,n}$ for the $k^{th}$ subchannel; said noise $\sigma_k^n$ including a background noise of said xDSL line and a crosstalk noise from other xDSL lines, the loading bit rate being calculated according to

$$b_k^n = \log_2(1 + \frac{|h_k^{n,n}|^2 s_k^n}{\sum_{m \neq n} |h_k^{n,m}|^2 s_k^m + \sigma_k^n}).$$

**Patentansprüche**

1. Verfahren für das dynamische Spektralmanagement einer gemeinsam genutzten Aufwärts- und Abwärts-xDSL-Frequenz, **dadurch gekennzeichnet, dass** es ein Übertragungskanalmodell $y_k = H_k x_k + \sigma_k$ umfasst, wobei $x_k$ ein Eingangsvektor des k-ten TONS ist, $y_k$ ein Ausgangsvektor des k-ten TONS ist, $x_k$ und $y_k$ jeweils N-dimensionale Vektoren sind, $H_k$ eine N*N-Übertragungsmatrix des k-ten TONS ist; und, falls der m-te Teilnehmer und der n-te Teilnehmer die gleiche Übertragungsrichtung auf dem k-ten TON haben, $h_k^{n,m}$ eine Nebensprechfunktion am fernen Ende ist; und falls die Übertragungsrichtungen entgegengesetzt sind, $h_k^{n,m}$ eine Nebensprechfunktion am nahen Ende ist;

und dass es die folgenden Schritte umfasst, die mit dem Sendekanalmodell ausgeführt werden:

Schritt a: Erzeugen aller möglichen Kombinationen von Unterkanälen sowohl in Aufwärts- als auch in Abwärtsrichtung einer xDSL-Leitung;
Schritt b: Bestimmen einer optimalen Spektrumkoordinationskombination aus den Kombinationen; und
Schritt c: Einstellen einer Übertragungsrichtung und einer Übertragungsleistung der xDSL-Leitung in Übereinstimmung mit der optimalen Kombination.

2. Verfahren für das dynamische Spektralmanagement einer gemeinsam genutzten Aufwärts- und Abwärts-xDSL-Frequenz nach Anspruch 1, wobei der Schritt a die folgenden Schritte umfasst:

Durchlaufen aller Teilnehmer n = 1, 2, ..., N und aller Unterkanäle k = 1, 2, ..., k in der Aufwärts- und der Abwärtsrichtung, Herausfinden aller Kombinationen, die $\delta_{k,n}^{up} + \delta_{k,n}^{down} = 1$ und $\delta_{k,n}^{up}, \delta_{k,n}^{down} \in \{0,1\}$ erfüllen, wobei die Kombinationen als die möglichen Aufwärts- und Abwärtskombinationen dienen;

wobei $\delta_{k,n}^{up}$ angibt, ob der n-te Teilnehmer auf dem k-ten Unterkanal eine Aufwärtsübertragung ist, wobei $\delta_{k,n}^{up} = 1$ die Aufwärtsübertragung bezeichnet, $\delta_{k,n}^{up} = 0$ eine Nichtaufwärtsübertragung bezeichnet; $\delta_{k,n}^{down}$ angibt, ob der n-te Teilnehmer auf dem k-ten Unterkanal eine Abwärtsübertragung ist, wobei $\delta_{k,n}^{down} = 1$ die Abwärtsübertragung bezeichnet und $\delta_{k,n}^{down} = 0$ eine Nichtabwärtsübertragung bezeichnet.

3. Verfahren für das dynamische Spektralmanagement einer gemeinsam genutzten Aufwärts- und Abwärts-xDSL-Frequenz nach Anspruch 2, wobei der Schritt b die folgenden Schritte umfasst:

Schritt b1: Finden eines optimalen Leistungszuweisungsschemas für jede der Kombinationen; und
Schritt b2: Vergleichen aller optimalen Leistungszuweisungsschemata, Erhalten des am stärksten optimalen Leistungszuweisungsschemas und Bestimmen einer Kombination mit dem am stärksten optimalen Leistungszuweisungsschema als die optimale Kombination.

4. Verfahren für das dynamische Spektralmanagement einer gemeinsam genutzten Aufwärts- und Abwärts-xDSL-Frequenz nach Anspruch 3, wobei der Schritt b1 die folgenden Schritte umfasst:

Schritt 1: Konstruieren eines mathematischen Modells

$$J_k = w_1 b_k^{1,up} + w_2 b_k^{1,down} + \sum_{n=2}^{N}(\lambda_n^{up} b_k^{n,up} + \lambda_n^{down} b_k^{n,down}) - \sum_{n=1}^{N}\mu_n s_k^n \, ,$$

wobei $s_k^n$ eine Übertragungsleistung für den k-ten Unterkanal auf der n-ten Teilnehmerleitung bezeichnet; $w_1$ und $w_2$ gegebene Konstanten sind, $\lambda_n^{up}$, $\lambda_n^{down}$ und $\mu_n$ jeweils Lagrange-Operatoren sind; $b_k^{n,up}$ und $b_k^{n,down}$ jeweils die Anzahl von Bits bezeichnen, die in der Aufwärtsrichtung und in der Abwärtsrichtung in dem k-ten Unterkanal auf der n-ten Teilnehmerleitung transportiert werden können; und

Schritt 2: für alle der möglichen Kombinationen in der Aufwärts- und in der Abwärtsrichtung Durchlaufen sämtlicher $s_k^n$ von 1 bis k, Anwenden von δ als ein minimales Durchlaufintervall und eines Unterkanals als eine Rekursionseinheit, wobei k = 1, 2, ..., k und n = 1, 2, ..., N, Finden durch Iteration eines Leistungszuweisungsschemas, das $J_k$ maximal macht und eine Gesamtleistungsbeschränkung jeder Teilnehmerleitung und eine Datenratenbeschränkung für jede Teilnehmerleitung erfüllt, und Bestimmen des Leistungszuweisungsschemas als das optimale Leistungszuweisungsschema.

5. Verfahren für das dynamische Spektralmanagement einer gemeinsam genutzten Aufwärts- und Abwärts-xDSL-Frequenz nach Anspruch 4, wobei der Schritt 2 die folgenden Schritte umfasst:

nach Abschluss des Durchlaufens sämtlicher Unterkanäle dynamisches Modifizieren jedes Gewichtungskoeffizienten gemäß jeder der folgenden Formeln:

$$\lambda_n^{up} = [\lambda_n^{up} + \varepsilon(R_{n,up}^{target} - R_n^{up})]^+, n = 2,...,N \, ,$$

$$\lambda_n^{down} = [\lambda_n^{down} + \varepsilon(R_{n,down}^{target} - R_n^{down})]^+, n = 2,...,N \, ,$$

$$\mu_n = [\mu_n + \varepsilon(\sum_{k=1}^{K} s_k^n - P_n)]^+, n = 1,...,N$$

bis die Gesamtleistung für jede Teilnehmerleitung und die Datenratenbeschränkung für jede Teilnehmerleitung erfüllt sind und ein stabiler Zustand erreicht ist, wobei das erhaltene Leistungszuweisungsschema das Leistungszuweisungsschema ist, das $J_k$ maximal macht.

6. Verfahren für das dynamische Spektralmanagement einer gemeinsam genutzten Aufwärts- und Abwärts-xDSL-Frequenz nach Anspruch 4, wobei der Schritt 1 die folgenden Schritte umfasst:

wenn $J_k$ berechnet wird, Erhalten eines Unterkanalrauschens $\sigma_k^{..}$ und einer Kanaldämpfungsfunktion $n_k$ für den k-ten Unterkanal; wobei das Rauschen $\sigma_n^k$ ein Hintergrundrauschen der xDSL-Leitung und ein Nebensprechrauschen von anderen xDSL-Leitungen enthält, wobei die Last-Bitrate berechnet wird gemäß

$$b_k^n = \log_2(1 + \frac{\left|h_k^{n,n}\right|^2 s_k^n}{\sum_{m \neq n} \left|h_k^{n,m}\right|^2 s_k^m + \sigma_k^n})$$

.

7. Vorrichtung für das dynamische Spektralmanagement einer gemeinsam genutzten Aufwärts- und Abwärts-xDSL-Frequenz, **dadurch gekennzeichnet, dass** sie Folgendes umfasst:

ein Modul zum Entwerfen von Bandplänen, das verwendet wird, um alle möglichen Kombinationen von Unterkanälen sowohl in Aufwärts- als auch in Abwärtsrichtung für eine xDSL-Leitung zu erzeugen;
ein Modul zum Bestimmen einer optimalen Kombination, das verwendet wird, um eine optimale Spektrumkoordinationskombination aus diesen Kombinationen zu bestimmen; und
ein Einstellmodul, das verwendet wird, um eine Übertragungsrichtung und eine Übertragungsleistung der xDSL-Leitung gemäß der optimalen Kombination einzustellen;
wobei die Vorrichtung ein Übertragungskanalmodell $y_k = H_k x_k + \sigma_k$ verwendet,
wobei $x_k$ ein Eingangsvektor des k-ten TONS ist, $y_k$ ein Ausgangsvektor des k-ten TONS ist, $x_k$ und $y_k$ jeweils N-dimensionale Vektoren sind, $H_k$ eine N*N-Übertragungsmatrix des k-ten TONS ist; und, wenn der m-te Teilnehmer und der n-te Teilnehmer die gleiche Übertragungsrichtung auf dem k-ten TON haben, $h_k^{n,m}$ eine Nebensprechfunktion am fernen Ende ist; wenn die Übertragungsrichtungen entgegengesetzt sind, $h_k^{n,m}$ eine Nebensprechfunktion am nahen Ende ist.

8. Vorrichtung für dynamisches Spektralmanagement für eine gemeinsam genutzte Aufwärts- und Abwärts-xDSL-Frequenz nach Anspruch 7, wobei das Modul zum Entwerfen von Bandplänen sämtliche Teilnehmer n = 1, 2, ..., N und sämtliche Unterkanäle k = 1, 2, ..., k in der Aufwärts- und in der Abwärtsrichtung durchläuft, sämtliche Kombinationen herausfindet, die $\delta_{k,n}^{up} + \delta_{k,n}^{down} = 1$ und $\delta_{k,n}^{up}$, $\delta_{k,n}^{down} \in \{0,1\}$ verfüllen, wobei die Kombinationen als die möglichen Aufwärts- und Abwärtskombinationen dienen;

wobei $\delta_{k,n}^{up}$ angibt, ob der n-te Teilnehmer auf dem k-ten Unterkanal eine Aufwärtsübertragung ist, $\delta_{k,n}^{up} = 1$ die Aufwärtsübertragung angibt, $\delta_{k,n}^{up} = 0$ eine Nichtaufwärtsübertragung angibt; $\delta_{k,n}^{down}$ angibt, ob der n-te Teilnehmer auf dem k-ten Unterkanal eine Abwärtsübertragung ist, $\delta_{k,n}^{down} = 1$ die Abwärtsübertragung angibt und $\delta_{k,n}^{down} = 0$ eine Nichtabwärtsübertragung angibt.

9. Vorrichtung für das dynamische Spektralmanagement einer gemeinsam genutzten Aufwärts- und Abwärts-xDSL-Frequenz nach Anspruch 8, wobei das Modul für die Bestimmung der optimalen Kombination Folgendes umfasst:

ein Spektrumkoordinationsmodul, das verwendet wird, um ein optimales Leistungszuweisungsschema für jede der Kombinationen zu finden; und
ein Vergleichsmodul, das verwendet wird, um sämtliche der optimalen Leistungszuweisungsschemata zu vergleichen, das am stärksten optimale Leistungszuweisungsschema zu erhalten und eine Kombination von Übertragungsrichtungen mit dem am stärksten optimalen Leistungszuweisungsschema als die optimale Kombination zu bestimmen.

10. Vorrichtung für das dynamische Spektralmanagement einer gemeinsam genutzten Aufwärts- und Abwärts-xDSL-Frequenz nach Anspruch 9, wobei das Spektrumkoordinationsmodul Folgendes umfasst:

ein Modellkonstruktionsmodul, das verwendet wird, um ein mathematisches Modell zu konstruieren,

$$J_k = w_1 b_k^{1.up} + w_2 b_k^{1.down} + \sum_{n=2}^{N} (\lambda_n^{up} b_k^{n.up} + \lambda_n^{down} b_k^{n.down}) - \sum_{n=1}^{N} \mu_n s_k^n ,$$

wobei $s_k^n$ eine Übertragungsleistung für den k-ten Unterkanal auf der n-ten Teilnehmerleitung angibt; $w_1$ und $w_2$ gegebene Konstanten sind, $\lambda_n^{up}$, $\lambda_n^{down}$ und $\mu_n$ jeweils

Lagrange-Operatoren sind; $b_k^{n.up}$ und $b_k^{n.down}$ jeweils die Anzahl von Bits bezeichnen, die in der Aufwärtsrichtung und in der Abwärtsrichtung in dem k-ten Unterkanal auf der n-ten Teilnehmerleitung transportiert werden können; und
ein Durchlaufmodul, das verwendet wird, um für alle der möglichen Kombinationen in der Aufwärts- und in der Abwärtsrichtung alle $s_k^n$ von 1 bis k zu durchlaufen, δ als ein minimales Durchlaufintervall und einen Unterkanal als eine Rekursionseinheit anzuwenden, wobei k = 1, 2, ..., k und n = 1, 2, ..., N ist, durch Iteration ein Leistungszuweisungsschema zu finden, das $J_k$ maximal macht und eine Gesamtleistungsbeschränkung jeder Teilnehmerleitung und eine Datenratenbeschränkung jeder Teilnehmerleitung erfüllt, und das Leistungszuweisungsschema als das optimale Leistungszuweisungsschema zu bestimmen.

11. Vorrichtung für das dynamische Spektralmanagement einer gemeinsam genutzten Aufwärts- und Abwärts-xDSL-Frequenz nach Anspruch 10, wobei das Durchlaufmodul auch dazu verwendet wird, nach Abschluss des Durchlaufens sämtlicher Unterkanäle jeden Gewichtungskoeffizienten gemäß jeder der folgenden Formeln dynamisch zu modifizieren:

$$\lambda_n^{up} = [\lambda_n^{up} + \varepsilon(R_{n.up}^{target} - R_n^{up})]^+, n = 2,...,N ,$$

$$\lambda_n^{down} = [\lambda_n^{down} + \varepsilon(R_{n.down}^{target} - R_n^{down})]^+, n = 2,...,N ,$$

$$\mu_n = [\mu_n + \varepsilon(\sum_{k=1}^{K} s_k^n - P_n)]^+, n = 1,...,N .$$

bis die Gesamtleistung für jede Teilnehmerleitung und die Datenratenbeschränkung für jede Teilnehmerleitung erfüllt sind und ein stabiler Zustand erreicht ist, wobei das erhaltene Leistungszuweisungsschema das Leistungszuweisungsschema ist, das $J_k$ maximal macht.

12. Vorrichtung für das dynamische Spektralmanagement einer gemeinsam genutzten Aufwärts- und Abwärts-xDSL-Frequenz nach Anspruch 10, wobei das Modellkonstruktionsmodul dann, wenn $J_k$ berechnet wird, ein Unterkanalrauschen $\sigma_k^n$ und eine Kanaldämpfungsfunktion $h_k^{n.n}$ für den k-ten Unterkanal erhält; und das Rauschen $\sigma_k^n$ ein Hintergrundrauschen der xDSL-Leitung und ein Nebensprechrauschen von anderen xDSL-Leitungen enthält, wobei die Last-Bitrate berechnet wird gemäß

$$b_k^n = \log_2(1 + \frac{|h_k^{n.n}|^2 s_k^n}{\sum_{m \neq n} |h_k^{n.m}|^2 s_k^m + \sigma_k^n}) .$$

**Revendications**

1. Procédé pour la gestion dynamique du spectre des fréquences xDSL amont et aval partagées, **caractérisé en ce qu'**il comprend un modèle de canal de transmission $y_k = H_k x_k + \sigma_k$, où $x_k$ est un vecteur d'entrée de la $k^{\text{ème}}$ TONALITÉ, $y_k$ est un vecteur de sortie de la $k^{\text{ème}}$ TONALITÉ, $x_k$ et $y_k$ sont tous deux des vecteurs de dimension N, $H_k$ est une matrice de transmission N*N de la $k^{\text{ème}}$ TONALITÉ ; et si le $m^{\text{ème}}$ abonné et le $n^{\text{ème}}$ abonné ont la même direction de transmission sur la $k^{\text{ème}}$ TONALITÉ , alors $h_k^{n,m}$ est une fonction de diaphonie d'extrémité distante ; si les directions de transmission sont opposées, alors $h_k^{n,m}$ est une fonction de diaphonie d'extrémité proche ;
   et les étapes suivantes, effectuées avec le modèle de canal de transmission :

   étape a : générer toutes les combinaisons possibles de sous-canaux dans les deux directions amont et aval pour une ligne xDSL ;
   étape b : déterminer une combinaison optimale de coordination du spectre desdites combinaisons ; et
   étape c : ajuster une direction de transmission et une puissance de transmission de ladite ligne xDSL en fonction de ladite combinaison optimale.

2. Procédé de gestion dynamique du spectre des fréquences xDSL amont et aval partagées selon la revendication 1, dans lequel ladite étape a comprend les étapes suivantes :

   parcourir tous les abonnés n = 1, 2, ... , N et tous les sous-canaux $k$ = 1, 2, ... , $k$ dans les directions amont et aval, trouver toutes les combinaisons qui satisfont $\delta_{k,n}^{amont} + \delta_{k,n}^{aval} = 1$ et $\delta_{k,n}^{amont}$, $\delta_{k,n}^{aval} \in \{0,1\}$, lesdites combinaisons jouant le rôle desdites combinaisons amont et aval possibles ;

   où $\delta_{k,n}^{amont}$ indique si le $n^{\text{ème}}$ abonné sur le $k^{\text{ème}}$ sous-canal est une transmission amont,

   $\delta_{k,n}^{amont} = 1$ désigne la transmission amont, $\delta_{k,n}^{amont} = 0$ désigne une transmission non amont ; $\delta_{k,n}^{aval}$ indique

   si le $n^{\text{ème}}$ abonné sur le $k^{\text{ème}}$ sous-canal est une transmission aval, $\delta_{k,n}^{aval} = 1$ désigne la transmission aval,

   et $\delta_{k,n}^{aval} = 0$ désigne une transmission non aval.

3. Procédé de gestion dynamique du spectre des fréquences xDSL amont et aval partagées selon la revendication 2, dans lequel ladite étape b comprend les étapes suivantes :

   étape b1 : trouver un schéma d'allocation de puissance optimal pour chacune desdites combinaisons ; et
   étape b2 : comparer la totalité desdits schémas d'allocation de puissance optimaux, obtenir le schéma d'allocation de puissance le plus optimal et déterminer une combinaison avec ledit schéma d'allocation de puissance le plus optimal en tant que ladite combinaison optimale.

4. Procédé de gestion dynamique du spectre des fréquences xDSL amont et aval partagées selon la revendication 3, dans lequel ladite étape b1 comprend les étapes suivantes :

   étape 1 : construire un modèle mathématique

$$J_k = w_1 b_k^{1,amont} + w_2 b_k^{1,aval} + \sum_{n=2}^{N} \left( \lambda_n^{amont} b_k^{n,amont} + \lambda_n^{aval} b_k^{n,aval} \right) - \sum_{n=1}^{N} \mu_n s_k^n,$$

   où $s_k^n$ désigne une puissance de transmission pour le $k^{\text{ème}}$ sous-canal sur la $n^{\text{ème}}$ ligne d'abonné ; $w_1$ et $w_2$

   sont des constantes données, $\lambda_n^{amont}$, $\lambda_n^{aval}$ et $\mu_n$ sont respectivement des opérateurs de Lagrange ; $b_k^{n,amont}$ et $b_k^{n,aval}$ désignent respectivement le nombre de bits qui peuvent être transportés dans la direction amont et dans la direction aval dans le $k^{ème}$ sous-canal sur la $n^{ème}$ ligne d'abonné ; et

étape 2 : parcourir, pour la totalité desdites combinaisons possibles dans les directions amont et aval, la totalité des $s_k^n$ de 1 à $k$, appliquer $\delta$ en tant qu'un intervalle de parcours minimum et un sous-canal en tant qu'unité de récursivité, où $k = 1, 2, \ldots , k$ et $n = 1, 2, \ldots, N$, trouver par itération un schéma d'allocation de puissance qui maximise $J_k$ et satisfait une limitation de puissance globale de chaque ligne d'abonné et une limitation de débit de données pour chaque ligne d'abonné, et déterminer le schéma d'allocation de puissance en tant que ledit schéma d'allocation de puissance optimal.

**5.** Procédé de gestion dynamique du spectre des fréquences xDSL amont et aval partagées selon la revendication 4, dans lequel ladite étape 2 comprend les étapes suivantes :

après l'achèvement du parcours de la totalité desdits sous-canaux, modifier dynamiquement chaque coefficient de pondération selon chacune des formules suivantes :

$$\lambda_n^{amont} = \left[ \lambda_n^{amont} + \varepsilon \left( R_{n,amont}^{cible} - R_n^{amont} \right) \right]^+, n = 2, \ldots, N,$$

$$\lambda_n^{aval} = \left[ \lambda_n^{aval} + \varepsilon \left( R_{n,aval}^{cible} - R_n^{aval} \right) \right]^+, n = 2, \ldots, N,$$

$$\mu_n = [\mu_n + \varepsilon(\sum_{k=1}^{K} s_k^n - P_n)]^+, n = 1, \ldots, N,$$

jusqu'à satisfaction de la puissance globale pour chaque ligne d'abonné et de la limitation du débit de données pour chaque ligne d'abonné et atteinte d'un état stable, le schéma d'allocation de puissance obtenu étant ledit schéma d'allocation de puissance qui maximise $J_k$.

**6.** Procédé de gestion dynamique du spectre des fréquences xDSL amont et aval partagées selon la revendication 4, dans lequel ladite étape 1 comprend les étapes suivantes :

lors du calcul du $J_k$, obtenir un bruit de sous-canal $\sigma_k^n$ et une fonction d'atténuation de canal $h_k^{n,n}$ pour le $k^{ème}$ sous-canal ; ledit bruit $\sigma_k^n$ comprenant un bruit de fond de ladite ligne xDSL et un bruit de diaphonie provenant d'autres lignes xDSL, le débit binaire de chargement étant calculé selon

$$b_k^n = \log_2(1 + \frac{\left|h_k^{n,n}\right|^2 s_k^n}{\sum_{m \neq n} \left|h_k^{n,m}\right|^2 s_k^m + \sigma_k^n}).$$

**7.** Dispositif pour la gestion dynamique du spectre des fréquences xDSL amont et aval partagées, **caractérisé en ce qu'**il comprend :

un module de conception de plan de bande, utilisé pour générer toutes les combinaisons réalisables de sous-canaux dans les deux directions amont et aval pour une ligne xDSL ;
un module de détermination de combinaison optimale, utilisé pour déterminer une combinaison optimale de coordination du spectre à partir desdites combinaisons ; et
un module d'ajustement, utilisé pour ajuster un direction de transmission et une puissance de transmission de ladite ligne xDSL selon ladite combinaison optimale ;
dans lequel le dispositif utilise un modèle de canal de transmission $y_k = H_k x_k + \sigma_k$, où $x_k$ est un vecteur d'entrée de la $k^{ème}$ TONALITÉ, $y_k$ est un vecteur de sortie de la $k^{ème}$ TONALITÉ, $x_k$ et $y_k$ sont tous deux des vecteurs

de dimension N, $H_k$ est une matrice de transmission N*N de la $k^{ème}$ TONALITÉ ; et si le $m^{ème}$ abonné et le $n^{ème}$ abonné ont la même direction de transmission sur la $k^{ème}$ TONALITÉ, alors $h_k^{n,m}$ est une fonction de diaphonie d'extrémité distante ; si les directions de transmission sont opposées, alors $h_k^{n,m}$ est une fonction de diaphonie d'extrémité proche.

8. Dispositif de gestion dynamique du spectre des fréquences xDSL amont et aval partagées selon la revendication 7, dans lequel ledit module de conception de plan de bande parcourt tous les abonnés $n$ = 1, 2, ... , $N$ et tous les sous-canaux $k$ = 1, 2, ... , $k$ dans les directions amont et aval, trouve toutes les combinaisons qui satisfont

$$\delta_{k,n}^{amont} + \delta_{k,n}^{aval} = 1 \text{ et } \delta_{k,n}^{amont}, \ \delta_{k,n}^{aval} \in \{0,1\}, \text{ lesdites combinaisons jouant le rôle desdites combinaisons amont}$$

et aval réalisables ;

où $\delta_{k,n}^{amont}$ indique si le $n^{ème}$ abonné sur le $k^{ème}$ sous-canal est une transmission amont, $\delta_{k,n}^{amont} = 1$ désigne la transmission amont, $\delta_{k,n}^{amont} = 0$ désigne une transmission non amont; $\delta_{k,n}^{aval}$ indique si le $n^{ème}$ abonné sur le $k^{ème}$ sous-canal est une transmission aval, $\delta_{k,n}^{aval} = 1$ désigne la transmission aval et $\delta_{k,n}^{aval} = 0$ désigne une transmission non aval.

9. Dispositif de gestion dynamique du spectre des fréquences xDSL amont et aval partagées selon la revendication 8, dans lequel ledit module de détermination de combinaison optimale comprend :

    un module de coordination du spectre, utilisé pour trouver un schéma d'allocation de puissance optimal pour chacune desdites combinaisons ; et
    un module de comparaison, utilisé pour comparer la totalité desdits schémas d'allocation de puissance optimaux, obtenir le schéma d'allocation de puissance le plus optimal et déterminer une combinaison de directions de transmission ayant ledit schéma d'allocation de puissance le plus optimal en tant que ladite combinaison optimale.

10. Dispositif de gestion dynamique du spectre des fréquences xDSL amont et aval partagées selon la revendication 9, dans lequel ledit module de coordination du spectre comprend :

    un module de construction de modèle, utilisé pour construire un modèle mathématique

$$J_k = w_1 b_k^{1,amont} + w_2 b_k^{1,aval} + \sum_{n=2}^{N} \left( \lambda_n^{amont} b_k^{n,amont} + \lambda_n^{aval} b_k^{n,aval} \right) - \sum_{n=1}^{N} \mu_n s_k^n,$$

où $s_k^n$ désigne une puissance de transmission pour le $k^{ème}$ sous-canal sur la $n^{ème}$ ligne d'abonné ; $w_1$ et $w_2$ sont des constantes données, $\lambda_n^{amont}$, $\lambda_n^{aval}$ et $\mu_n$ sont respectivement des opérateurs de Lagrange ; $b_k^{n,amont}$ et $b_k^{n,aval}$ désignent respectivement le nombre de bits qui peuvent être transportés dans la direction amont et dans la direction aval dans le $k^{ème}$ sous-canal sur la $n^{ème}$ ligne d'abonné ; et
    un module de parcours, utilisé pour parcourir, pour la totalité desdites combinaisons possibles dans les directions amont et aval, la totalité des $s_k^n$ de 1 à $k$, appliquer δ en tant qu'un intervalle de parcours minimum et un sous-canal en tant qu'unité de récursivité, où $k$ = 1, 2, ... , k et $n$ = 1, 2, ..., N, trouver par itération un schéma d'allocation de puissance qui maximise $J_k$ et satisfait une limitation de puissance globale de chaque ligne d'abonné et une limitation de débit de données pour chaque ligne d'abonné, et déterminer le schéma d'allocation de puissance en tant que ledit schéma d'allocation de puissance optimal.

11. Dispositif de gestion dynamique du spectre des fréquences xDSL amont et aval partagées selon la revendication 10, dans lequel ledit module de parcours est également utilisé pour, après l'achèvement du parcours de la totalité desdits sous-canaux, modifier dynamiquement chaque coefficient de pondération selon chacune des formules

suivantes :

$$\lambda_n^{amont} = \left[ \lambda_n^{amont} + \varepsilon \left( R_{n,amont}^{cible} - R_n^{amont} \right) \right]^+ , \, n = 2, \ldots, N,$$

$$\lambda_n^{aval} = \left[ \lambda_n^{aval} + \varepsilon \left( R_{n,aval}^{cible} - R_n^{aval} \right) \right]^+ , \, n = 2, \ldots, N,$$

$$\mu_n = [\mu_n + \varepsilon(\sum_{k=1}^{K} s_k^n - P_n)]^+ , \, n = 1, \ldots, N,$$

jusqu'à satisfaction de la puissance globale pour chaque ligne d'abonné et de la limitation du débit de données pour chaque ligne d'abonné et atteinte d'un état stable, le schéma d'allocation de puissance obtenu étant ledit schéma d'allocation de puissance qui maximise $J_k$.

12. Dispositif de gestion dynamique du spectre des fréquences xDSL amont et aval partagées selon la revendication 10, dans lequel ledit module de construction de modèle, lors du calcul du $J_k$, obtient un bruit de sous-canal $\sigma_k^n$ et une fonction d'atténuation de canal $h_k^{n,n}$ pour le $k^{ème}$ sous-canal ; ledit bruit $\sigma_k^n$ comprenant un bruit de fond de ladite ligne xDSL et un bruit de diaphonie provenant d'autres lignes xDSL, le débit binaire de chargement étant calculé selon

$$b_k^n = \log_2(1 + \frac{\left| h_k^{n,n} \right|^2 s_k^n}{\sum_{m \neq n} \left| h_k^{n,m} \right|^2 s_k^m + \sigma_k^n}).$$

FIGURE 1

FIGURE 2

NEXT crosstalk

FEXT

FEXT crosstalk

# FIGURE 3

# FIGURE 4

FIGURE 5

```
                    ┌─────────────┐
                    │    Start    │
                    └──────┬──────┘
                           │
                           ▼
    ┌──────────────────────────────────────────┐
    │   Generate all feasible combinations of   │         S102
    │      tones in both upstream and           │
    │         downstream directions             │
    └──────────────────────────────────────────┘
    ┌──────────────────────────────────────────────┐
    │ Determine the optimal combination             │
    │          ┌──────────────────────────────┐     │      S104
    │          │  Find the optimal power allocation │ │
    │          │   scheme in each combination  │     │      S105
    │          └───────────────┬──────────────┘     │
    │                          │                     │      S106
    │                          ▼                     │
    │          ┌──────────────────────────────┐     │
    │          │ Compare and determine the optimal │ │
    │          │         combination           │     │
    │          └──────────────────────────────┘     │
    └──────────────────────────────────────────────┘
                           │
                           ▼
    ┌──────────────────────────────────────────┐
    │   Regulate transmission direction and      │        S108
    │  transmission power according to the optimal │
    │            combination                     │
    └──────────────────────────────────────────┘
                           │
                           ▼
                    ┌─────────────┐
                    │    Finish   │
                    └─────────────┘
```

# FIGURE 6

```
┌─────────────────────────────────┐
│      Bandplan Design            │
│         Module                  │
│          102                    │
└─────────────────────────────────┘
              │
              ▼
┌─────────────────────────────────────┐
│ Optimal Combination                 │
│ Assessment Module                   │
│        105                          │
│    ┌───────────────────────────┐    │
│    │  Spectrum Coordination    │    │
│    │       Module              │    │
│    │        104                │    │
│    └───────────────────────────┘    │
│                │                    │
│                ▼                    │
│    ┌───────────────────────────┐    │
│    │                           │    │
│    │   Comparison Module       │    │
│    │        106                │    │
│    │                           │    │
│    └───────────────────────────┘    │
└─────────────────────────────────────┘
              │
              ▼
┌─────────────────────────────────┐
│                                 │
│   Regulation Module             │
│        108                      │
│                                 │
└─────────────────────────────────┘
```

100

# FIGURE 7

FIGURE 8

```
                        ┌─────────────┐
                        │    Start    │
                        └──────┬──────┘
                               │
                               ▼
        ┌──────────────────────────────────────────────┐
        │            Set initial coefficients          │        S202
        └──────────────────────┬───────────────────────┘
                               │
                               ▼
        ┌──────────────────────────────────────────────┐
        │    Generate all feasible combinations of tones│       S204
        │    in both upstream and downstream directions │
        └──────────────────────┬───────────────────────┘
                               │
                               ▼
        ┌──────────────────────────────────────────────┐
        │        Traverse each combination from Step    │
        │     S204, find the optimal power allocation   │       S206
        │           scheme for each combination         │
        └──────────────────────┬───────────────────────┘
                               │
                               ▼
        ┌──────────────────────────────────────────────┐
        │        Determine the optimal combination      │       S208
        └──────────────────────┬───────────────────────┘
                               │
                               ▼
        ┌──────────────────────────────────────────────┐
        │         Modify transmission direction and     │
        │    transmission power according to the optimal│       S210
        │                  combination                  │
        └──────────────────────┬───────────────────────┘
                               │
                               ▼
                        ┌─────────────┐
                        │   Finish    │
                        └─────────────┘
```

FIGURE 9

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- CN 200610083512

- WO 02100008 A1

### Non-patent literature cited in the description

- **Forouzan A.R. et al.** Generalized iterative spectrum balancing and grouped vectoring for maximal throughput digital subscriber lines. *IEEE GLOBE-COM,* 28 November 2005
- **Cendrillon R. et al.** Optimal multi-user spectrum management for digital subscriber lines. *IEEE COM-MUNICATIONS,* 20 June 2004, vol. 1
- **CENDRILLON, W. YU ; M. MOONEN ; J. VERLINDEN ; T. BOSTOEN.** Optimal multi-subscriber spectrum management for digital subscriber lines. *IEEE Transactions on Communications,* 2005

- **R. CENDRILLON ; M. MOONEN.** Iterative spectrum balancing for digital subscriber lines. *Proc. IEEE ICC,* 2005
- **W. YU ; G. GINIS ; J. CIOFFI.** Distributed multi-subscriber power control for digital subscriber lines. *IEEE Journal on Selected, Areas in Communication,* June 2002, vol. 20 (5), 1105-1115